# EUROPÄISCHE PATENTSCHRIFT

(11) **EP 0 724 046 B1**
(45) Veröffentlichungstag und Bekanntmachung des Hinweises auf die Patenterteilung: **08.09.1999**
(21) Anmeldenummer: 96810044.6
(22) Anmeldetag: 23.01.1996
(51) Int. Cl.: E04B 1/41, F16S 3/02, E04C 3/07, E04B 1/38

(54) **Trägerelement**
Supporting element
Elément de support

(30) Priorität: 26.01.1995 DE 19502287
(43) Veröffentlichungstag der Anmeldung: 31.07.1996
(73) Patentinhaber: HILTI Aktiengesellschaft, 9494 Schaan (LI)
(72) Erfinder: Stampfl, Hans, A-6807 Feldkirch-Tisis (AT)
(74) Vertreter: Wildi, Roland

(56) Entgegenhaltungen:
- DE-A- 2 910 967
- DE-C- 814 047
- DE-U- 1 727 843
- DE-U- 1 996 412
- DE-U- 7 311 248

## Beschreibung

Die Erfindung betrifft ein Trägerelement mit zwei parallel zueinander verlaufenden, C-förmigen Profilschienen, die an ihren Stegen mit ihren Öffnungen voneinander abgewandt durch wenigstens ein Nietelement miteinander verbunden sind, wobei das Nietelement zwei koaxial zueinander verlaufende Durchtrittsöffnungen beider Profilschienen durchsetzt und an den Innenseiten der Stege mit radial erweiterten Auflageflächen anliegt.

Für die Verlegung von Rohren werden C-förmige Profilschienen mit nach innen abgekanteten Rändem verwendet, an denen mit Hilfe entsprechender Rohrschellen Rohre befestigbar sind. Die Profilschienen können dabei mit ihren Stegen an Decken, Wänden oder Böden befestigt sein.

Aus der DE-OS 29 10 967 ist ein Trägerelement mit zwei parallel zueinander verlaufenden, C-förmigen Profilschienen bekannt. Die beiden Profilschienen sind an ihren Stegen mit ihren Öffnungen voneinander abgewandt und durch eine Reihe von Nietelementen in Form von Halbrundnieten miteinander verbunden. Da die Öffnungen beider Profilschienen voneinander abgewandt sind, können auf zwei einander gegenüberliegenden Seiten Rohrschellen befestigt werden.

Die Befestigung dieses bekannten Trägerelementes an einem Bauteil in Form einer Decke erfolgt mit Ankerhängem, die fest mit der Decke verbunden sind und in einem bestimmten Abstand von der Decke in das Innere einer Profilschiene ragen und mit nach oben gerichteten Vorsprüngen abgekantete Ränder der Profilschiene hintergreifen. Nachteilig bei diesem bekannten Trägerelement ist damit die Notwendigkeit der speziellen Ankerhänger und die damit verbundene ausschliessliche Befestigungsmöglichkeit in hängender Weise.

Der Erfindung liegt die Aufgabe zugrunde, ein Trägerelement auf der Basis von zwei C-förmigen Profilschienen zu schaffen, wobei die Profilschienen einerseits einfach und wirtschaftlich miteinander verbindbar sind und andererseits das Tägerelement schnell, sicher und lagenunabhängig mit einfachen Befestigungselementen an Bauteilen befestigbar ist. Weiters soll die Möglichkeit geschaffen werden, wenigstens zwei Trägerteile miteinander verbinden zu können.

Erlindungsgemäss wird die Aufgabe dadurch gelöst, dass das Nietelement als Hohlniet ausgebildet ist, der eine zu den Durchtrittsöffnungen koaxial und zu den Auflageflächen rechtwinklig verlaufende, zentrale Durchgangsbohrung aufweist.

Die spezielle Ausgestaltung des Hohlniets ermöglicht die Festlegung des Trägerelementes an einem Bauteil, indem ein in einem Bauteil festlegbares bzw. In dem Bauteil verankertes Befestigungselement die zentrale Durchgangsbohrung durchsetzt und mit einem radial erweiterten Bereich an der von dem Bauteil abgewandten Stimseite des Hohlniets anliegt. Bei dem Befestigungselement kann es sich beispielsweise um eine Schraube handeln, die in ein im Bauteil angeordnetes Innengewinde eindrehbar ist. Den radial erweiterten Bereich bildet dabei der Kopf der Schraube. Der Schaft und das Gewinde sind auf den Durchmesser der Durchgangsbohrung abgestimmt. Als Befestigungselement kann auch ein fest in dem Bauteil mittels eines Mörtels verankerter Befestigungsanker, beispielsweise in Form einer Gewindestange dienen, auf die eine dem Festlegen des Trägerelementes auf dem Bauteil dienende Mutter aufdreh- und festziehbar ist.

Die Verwendung von Hohlnieten ermöglicht zwei oder mehrere Trägerelemente mit Hilfe eines Befestigungselementes in Form einer Schraube derart miteinander zu verbinden, dass sie übereinander, parallel zueinander und sich in verschiedene Richtungen erstreckend angeordnet sind. Die Schraube durchsetzt dabei die Durchgangsbohrungen der Hohlnieten und liegt mit radial erweiterten Bereichen - dem Schraubenkopf und der Mutter - an den voneinander abgewandten Stimseiten der Hohlnieten der äussersten Trägerelemente an.

Eine Verbesserung der Verbindung zur Steigerung der aufnehmbaren Lastwerte wird erreicht mit Hohlnieten, deren Auflageflächen zusätzliche Kräfte aufnehmende Kragen übergreifen, die von der Innenseite der Stege im wesentlichen rechtwinklig abragen und die Durchtrittsöffnungen umgeben.

Um eine axial begrenzte Verschiebung des Trägerelementes gegenüber einem in einem Bauteil verankerten Befestigungselement erreichen zu können, weist zweckmässigerweise der Hohlniet und die Durchtrittsöffnungen einen langlochartigen Querschnitt auf. Die kleinste lichte Weite der Zentralbohrung des Hohlniets entspricht dabei im wesentlichen dem Durchmesser des Befestigungselementes, das insbesondere eine Gewindestange ist.

Die Erfindung wird anhand von Zeichnungen, die ein Ausführungsbeispiel wiedergeben, näher erläutert. Es zeigen:
- Fig. 1: ein erfindungsgemässes, an zwei Bauteilen befestigtes Trägerelement, an dem mehrere Rohrschellen befestigt sind;
- Fig. 2: einen Schnitt durch das Trägerelement gemäss Fig. 1 entlang der Linie II-II; in vergrösserter Darstellung;
- Fig. 3: einen Schnitt durch ein weiteres Trägerelement, bei dem die Durchtrittsöffnungen der Profilschienen von Kragen umgeben sind; in vergrösserter Darstellung;
- Fig. 4: eine Draufsicht auf einen Teil eines weiteren Trägerelementes mit einem Hohlniet mit langlochartigem Querschnitt.

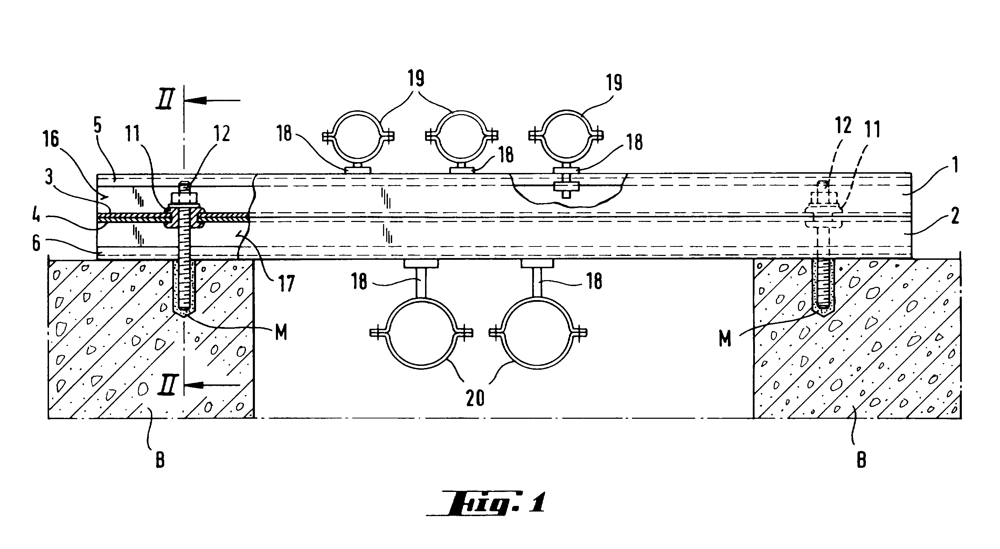

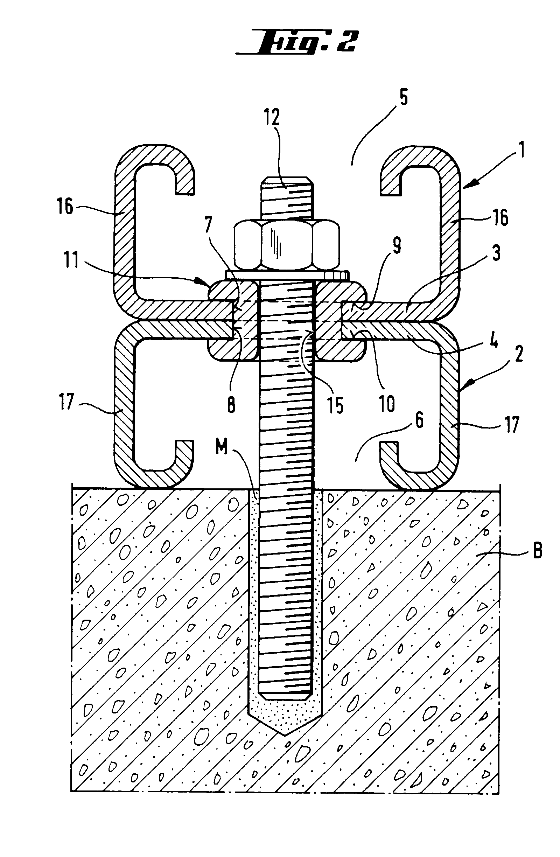

Das in Fig. 1 und in Fig. 2 dargestellte Trägerelement besitzt zwei parallel zueinander verlaufende, C-förmige Profilschienen 1, 2 die an ihren Stegen 3, 4 mit ihren Öffnungen 5, 6 voneinander abgewandt durch eine Reihe von Hohlnieten 11 miteinander verbunden sind. Die Hohlnieten 11 durchsetzen jeweils zwei koaxial zueinander verlaufende Durchtrittsöffnungen 7, 8 beider Profilschienen 1, 2 und liegen an den Innenseiten der Stege 3, 4 mit radial erweiterten Auflageflächen 9, 10 an. Die Profilschienen 1, 2 weisen die Öffnungen 5, 6 auf, die seitlich begrenzende Ränder 16, 17 haben und nach innen abgekantet sind.

In die Öffnungen 5, 6 beider Profilschienen 1, 2 ragen mehrere Anschlusselemente 18, die der Befestigung von Rohrschellen 19, 20 an dem Trägerelement dienen.

Das Trägerelement liegt mit beiden Endbereichen auf zwei Bauteilen B, wobei die Profilschiene 2 mit der Öffnung 6 nach unten in direktem Kontakt mit den Oberflächen der beiden Bauteile B steht. Zwei Gewindestangen 12 die mittels eines Mörtels M fest in den Bauteilen B verankert sind, durchsetzen jeweils eine zentrale Durchgangsbohrung 15 der Hohlnieten 11 und legen das Trägerelement mit Hilfe von auf die Gewindestangen 12 aufgeschraubten Muttem unter Zwischenlage jeweils einer Beilagscheibe auf den Bauteilen B fest.

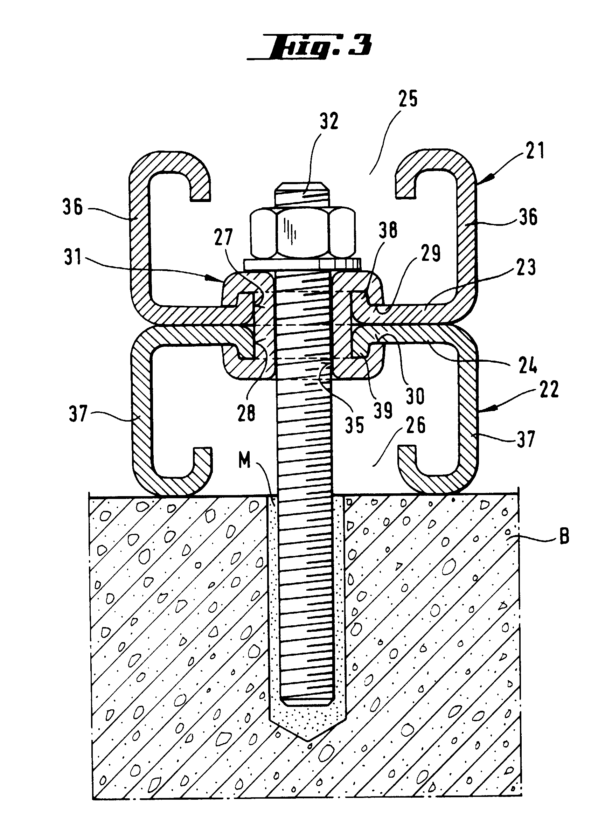

Das in Fig. 3 vergössert dargestellte Trägerelement besitzt zwei C-förmige Profilschienen 21, 22, die an ihren Stegen 23, 24 mit ihren Öffnungen 25, 26 voneinander abgewandt durch eine Reihe von Hohlnieten 31 miteinander verbunden sind. In der Fig. 3 ist nur ein Hohlniet 31 ersichtlich, der zwei koaxial zueinander verlaufende Durchtrittsöffnungen 27, 28 beider Profilschienen 21, 22 durchsetzt. Die Profilschienen 21, 22 weisen auf der Innenseite Kragen 38, 39 auf, die von den Stegen 23, 24 im wesentlichen rechtwinklig abragen und die Durchtrittsöffnungen 27, 28 umgeben. Radial erweiterte Auflageflächen 29, 30 des Hohlniets 31 liegen, die Kragen 38, 39 beider Profilschienen 21, 22 übergreifend, an den Innenseiten der Stege 23, 24 an. Die Profilschienen 21, 22 weisen die Öffnungen 25, 26 auf, die seitlich begrenzende Ränder 36, 37 haben und nach innen abgekantet sind

Das Trägerelement liegt auf einem Bauteil B auf. Die Profilschiene 22 steht mit der Öffnung 26 nach unten in direktem Kontakt mit den Oberflächen eines Bauteiles B. Mittels einer die zentrale Durchgangsbohrung 35 des Hohlniets 31 durchsetzenden Gewindestange 32 und einer sich auf der Gewindestange 32 sitzenden Mutter ist das Trägerelement fest mit dem Bauteil B verbunden. Die Gewindestange 32 ist mittels eines Mörtels M fest in dem Bauteil B verankert. Der Gewindeaussendurchmesser der Gewindestange 32 entspricht im wesentlichen dem Innendurchmesser der zentralen Durchgangsbohrung 35 des Hohlniets 31.

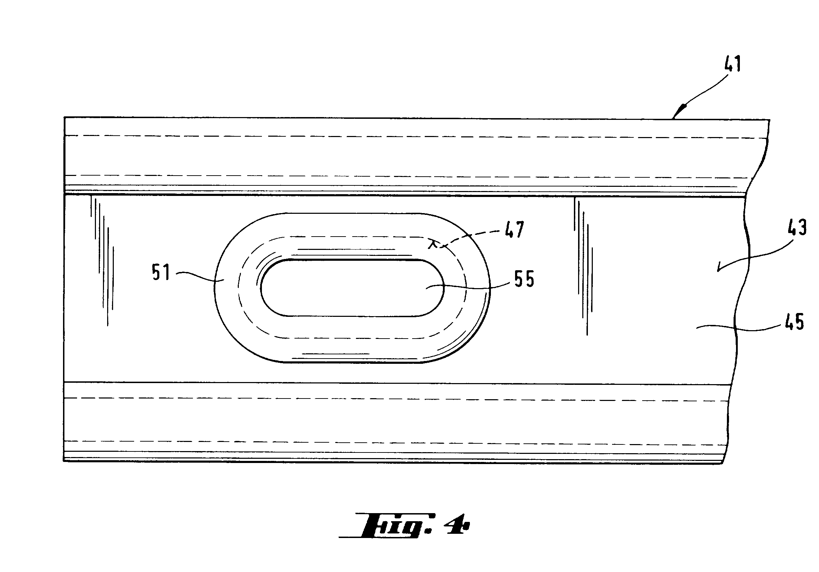

Die Fig. 4 zeigt eine Draufsicht auf ein Trägerelement,mit zwei parallel zueinander verlaufenden C-förmigen Profilschienen 41 die an ihren Stegen 43 mit ihren Öffnungen 45 voneinander abgewandt durch wenigstens einen Hohlniet 51 miteinander verbunden sind. Zwei koaxial zueinander verlaufende Durchtrittsöffnungen 47 und eine zentrale Durchgangsbohrung 55 des Hohlniets 51 weisen einen langlochartigen Querschnitt auf. Gegenüber einem die zentrale Durchgangsbohrung 55 des Hohlniets 51 durchsetzenden Befestigungselement ist das Trägerelement somit axial begrenzt versetzbar.

## Patentansprüche

1. Trägerelement mit zwei parallel zueinander verlaufenden, C-förmigen Profilschienen (1, 2, 21, 22, 41), die an ihren Stegen (3, 4, 23, 24, 43) mit ihren Öffnungen (5, 6, 25, 26, 45) voneinander abgewandt durch wenigstens ein Nietelement miteinander verbunden sind, wobei das Nietelement zwei koaxial zueinander verlaufende Durchtrittsöffnungen (7, 8, 27, 28, 47) beider Profilschienen (1, 2, 21, 22, 41) durchsetzt und an den Innenseiten der Stege (3, 4, 23, 24, 43) mit radial erweiterten Auflageflächen (9, 10, 29, 30) anliegt, **dadurch gekennzeichnet,** dass das Nietelement als Hohlniet (11, 31, 51) ausgebildet ist, der eine zu den Durchtrittsöffnungen (7, 8, 27, 28, 47) koaxial und zu den Auflageflächen rechtwinklig verlaufende zentrale Durchgangsbohrung (15, 35, 55) aufweist.

2. Trägerelement nach Anspruch 1, dadurch gekennzeichnet, dass die Auflageflächen (29, 30) Kragen (38, 39) übergreifen, die von der Innenseite der Stege (23, 24) im wesentlichen rechtwinklig abragen und die Durchtrittsöffnungen (27, 28) umgeben.

3. Trägerelement nach Anspruch 1 oder 2, dadurch gekennzeichnet, dass die Durchgangsbohrung (55) und die Durchtrittsöffnungen (47) einen langlochartigen Querschnitt aufweisen.

## Claims

1. Support element comprising two parallel C-shaped profile rails (1, 2, 21, 22, 41) which are, at their webs (3, 4, 23, 24, 43) facing away from each other with their openings (5, 6, 25, 26, 45), connected by at least one rivet element, and the rivet element passes through two coaxially extending passages (7, 8, 27, 28, 47) of both profile rails (1, 2, 21, 22, 41) and abuts at the insides of the webs (3, 4, 23, 24, 43) with radially extended seating surfaces (9, 10, 29, 30), **characterised in that** the rivet element is designed as a hollow rivet (11, 31, 51) comprising a central throughbore (15, 35, 55) extending coaxially relative to the passages (7, 8, 27, 28, 47) and rectangularly relative to the seating surfaces.

2. Support element according to Claim 1, **characterised in that** the seating surfaces (29, 30) reach over collars (38, 39) which protrude essentially rectangularly from the inside of the webs (23, 24) and surround the passages (27, 28).

3. Support element according to Claim 1 or 2, **characterised in that** the throughbore (55) and the passages (47) have the cross-section of an elongated hole.

## Revendications

1. Élément de support comprenant deux rails profilés en C (1, 2, 21, 22, 41) qui sont parallèles l'un à l'autre et qui sont reliés au niveau de leurs âmes (3, 4, 23, 24, 43) par au moins un élément de rivetage, leurs ouvertures (5, 6, 25, 26, 45) étant opposées l'une à l'autre, l'élément de rivetage traversant deux orifices traversants coaxiaux entre eux (7, 8, 27, 28, 47) des deux rails profilés (1, 2, 21, 22, 41) et reposant sur la face intérieure des âmes (3, 4, 23, 24, 43) par des surfaces d'appui élargies radialement (9, 10, 29, 30), caractérisé en ce que l'élément de rivetage est conformé en rivet tubulaire (11, 31, 51) pourvu d'un trou central débouchant (15, 35, 55) qui est coaxial aux orifices traversants (7, 8, 27, 28, 47) et qui s'étend à angle droit par rapport aux surfaces d'appui.

2. Élément de support selon la revendication 1, caractérisé en ce que les surfaces d'appui (29, 30) enserrent des rebords (38, 39) qui dépassent sensiblement à angle droit de la face intérieure des âmes (23, 24) et qui entourent les orifices traversants (27, 28).

3. Élément de support selon la revendication 1 ou 2, caractérisé en ce que le trou débouchant (55) et les orifices traversants (47) présentent une section oblongue.
